Europäisches Patentamt

European Patent Office

Office européen des brevets

(19)

(11) Publication number: **0 355 289**

A1

## EUROPEAN PATENT APPLICATION

(12)

(21) Application number: 89110500.9

(22) Date of filing: 09.06.89

(51) Int. Cl.⁴: **G01P 15/09**

(30) Priority: 01.07.88 US 214571

(43) Date of publication of application:
28.02.90 Bulletin 90/09

(84) Designated Contracting States:
**BE DE FR GB IT NL SE**

(71) Applicant: **PENNWALT CORPORATION**
**Pennwalt Building Three Parkway**
**Philadelphia Pennsylvania 19102(US)**

(72) Inventor: **Henry, John Christopher**
**605 Bismark Way**
**King of Prussia Pennsylvania 19406(US)**

(74) Representative: **Kraus, Walter, Dr. et al**
**Patentanwälte Kraus, Weisert & Partner**
**Thomas-Wimmer-Ring 15**
**D-8000 München 22(DE)**

(54) **Accelerometer.**

(57) An accelerometer (10) comprising a piezoelectric polymer body (16) as a transducer element is disclosed. The piezoelectric polymer body (16), with the appropriate electrodes (14), is disposed on a rigid dielectric substrate (12). An inertia mass (22) is disposed over the piezoelectric polymer body (16) such that when the substrate (12) is accelerated, an electrical output is produced between the electrodes (14, 26). The design of the accelerometer (10) allows it to be fabricated into a very small, lightweight package which allows for vibration testing to be carried out on virtually any vibrating element.

EP 0 355 289 A1

## Accelerometer

### Background of the Invention

The present invention relates to an electromechanical transducer and, more particularly, to an accelerometer which uses a polymeric piezoelectric material as the transducer element.

Accelerometers are typically used in vibration analysis to determine the forces which are exerted on an object when it is subjected to excessive motion. For example, an accelerometer is often mounted on a machine so that vibration levels within the machine can be continuously monitored. A sudden change in the vibration level of a machine often indicates that mechanical failure is imminent. Furthermore, it is often desirable to monitor the vibration level of a particular component part so that it is not subjected to forces which would otherwise cause the part to fail.

Accelerometers generally employ a ceramic piezoelectric material, such as barium titanate, which produces an electrical output that is proportional to the vibratory acceleration. A ceramic piezoelectric element is typically configured within the accelerometer such that a mass exerts either a compressive or shear force on the piezoelectric transducer element. Compression type accelerometers generally comprise a base member with an upstanding centrally disposed post. A plurality of annularly shaped ceramic piezoelectric discs are coaxially disposed around the post in a stacked arrangement. An inertia mass is also coaxially disposed around the post such that it rests upon the stack of piezoelectric discs. This mass may also be preloaded with a stiff spring so that a constant force is exerted against the piezoelectric elements. When the accelerometer is subjected to vibration, the mass exerts a force on the piezoelectric disc and a charge is produced which is proportional to the acceleration of the mass. An example of a compression type accelerometer may be found in U.S. Patent 3,397,329 issued August 13, 1968 to J. C. Riedel.

Shear type accelerometers also contain a base member with an upwardly extending post member, but the post has a triangular cross section. A piezoelectric element is affixed to each of the major faces of the post. An inertia mass is then attached to the exposed major surface of each of the piezoelectric elements. A ring may be coaxially disposed around the center post to clamp together the piezoelectric elements and the inertia masses. When the accelerometer is vibrated, the inertia mass exerts a shear force on the piezoelectric element which in turn produces an output signal which is proportional to the acceleration.

Although these accelerometers which employ ceramic piezoelectric elements are useful for a variety of applications, a need has developed for a lightweight, inexpensive accelerometer which can be easily mounted on an object which is to undergo vibration analysis.

### Summary of the Invention

The accelerometer of the present invention comprises a piezoelectric polymer body having opposed first and second surfaces. The first surface of the body is in electrical contact with an electroconductive layer which is disposed over at least a portion of a rigid dielectric substrate. This electroconductive layer forms a first electrode. An electroconductive inertia mass, which also functions as a second electrode, is disposed in electrical contact with a second surface of the piezoelectric polymer body. When the substrate is accelerated in a direction substantially perpendicular to its major surface, an electrical output is produced between the first and second electrodes.

As a further embodiment of the present invention, an electroconductive layer may be disposed over the second surface of the piezoelectric polymer body and function as a second electrode. The inertia mass would then be disposed over the second electrode.

### Brief Description of the Drawing

Figure 1 is a side view of the accelerometer of the present invention which utilizes the inertia mass as one of the electrodes on the piezoelectric polymer body.

Figure 2 is a plan view of the accelerometer shown in Figure 1.

Figure 3 is a side view of an accelerometer of the second embodiment of the present invention where a separate electrode is disposed between the inertia mass and the piezoelectric polymer body.

Figure 4 is a still further embodiment of the present invention which employs a dielectric polymer layer having a plurality of electrical conductors which function as the first electrode and the leads for making electrical connections with the accelerometer.

## Detailed Description of the Preferred Embodiments

The accelerometer of the present invention includes a transducing element constructed from a piezoelectric polymer material. Polyvinylidene fluoride (PVDF) film is an example of a polymer which possesses piezoelectric properties. Polyvinylidene fluoride is approximately 50% crystalline and 50% amorphous. The principal crystalline forms of PVDF are the highly polar beta form and the non-polar alpha form. Useful piezoelectric activity is associated with the polar beta form. In order to increase the piezoelectric activity of PVDF, the film is mechanically oriented and subjected to an intense electrical field, otherwise known as poling, to cause the oriented polarized beta form crystallites to predominate. Polyvinylidene fluoride films which have been treated in this manner are commerically available from the Pennwalt Corporation, Philadelphia, PA. Copolymers having a major proportion of vinylidene fluoride and at least one copolymerizable comonomer, prefably a fluorinated olefinic comonomer, such as trifluoroethylene or tetrafluoroethylene, may also be used in the present invention. Other useful piezoelectric polymers include copolymers and terpolymers containing vinylidene fluoride and polyvinyl cyanate. Preferred piezoelectric polymer materials include a copolymer of from about 65 to 95 mole percent vinylidene fluoride and from about 35 to 5 mole percent trifluoroethylene.

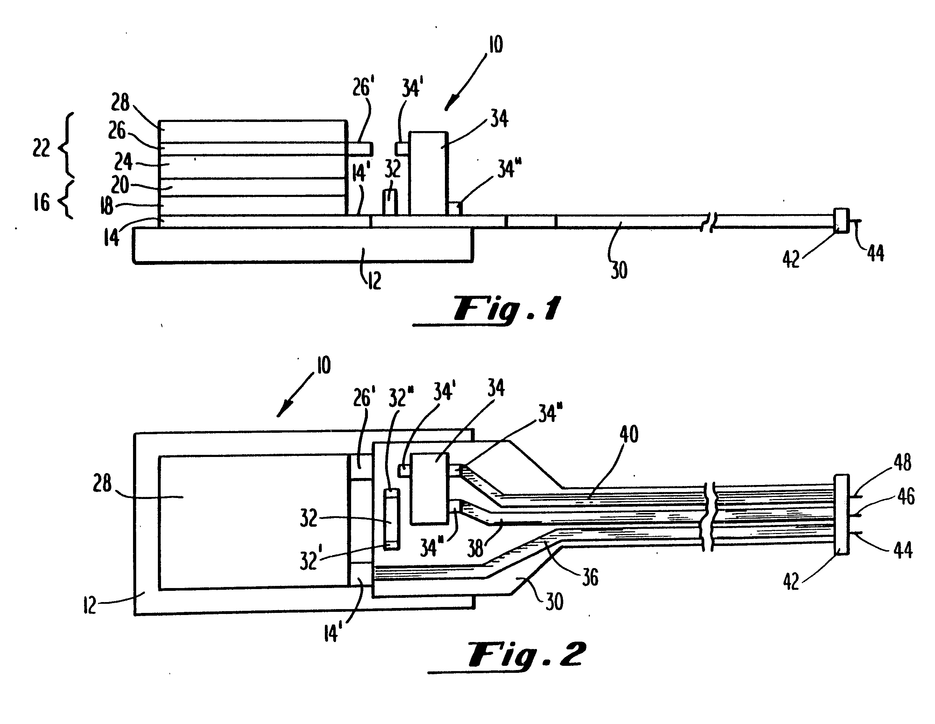

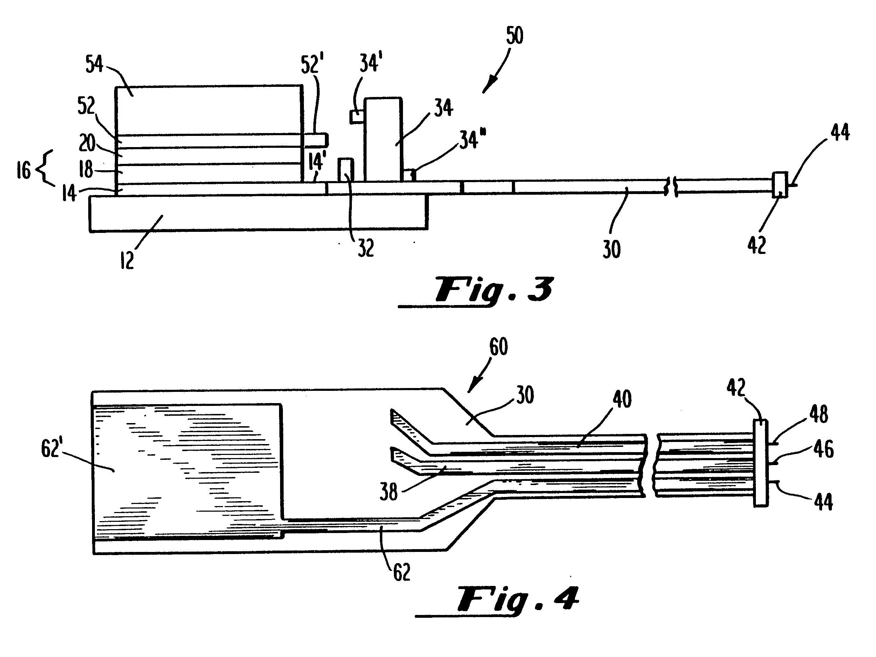

Referring now to Figures 1 and 2, the accelerometer of the first embodiment of the present invention is generally designated as 10. Like reference numerals between the figures identify like elements.

The accelerometer 10 includes a rigid dielectric substrate 12 which may also be thermally insulating. The substrate 12 may be fabricated from a ceramic, such as alumina. A machinable ceramic, such as MACOR available from Corning, may also be used as the substrate 12. Other materials suitable for use as the substrate 12 include glass reinforced PCB boards, reinforced plastic poxy boards, silicon carbide, PYREX® and other glass products. An electroconductive layer 14, forming a first electrode, is disposed on a first major surface of the substrate 12. The electroconductive layer 14 may be a thin film of an electroconductive material, such as stainless steel or brass. the electroconductive layer 14 also contains a tab portion 14′ which will be used to make electrical connections with other portions of the accelerometer.

The accelerometer 10 also includes a piezoelectric polymer body 16 which, as shown in Figure 1, is comprised of two piezoelectric polymer films 18 and 20. The piezoelectric polymer films have been processed such that they are poled in a direction which is substantially perpendicular to the major surface of the substrate 12 where the first electroconductive layer 14 is disposed. Although the piezoelectric polymer body 16 is shown as two layers 18 and 20, it may consist of a single layer or more than two layers. A multilayer construction is preferred because it can increase the accelerometer's sensitivity, capacitance or both.

An electroconductive inertia mass 22, which also functions as the second electrode, is disposed in surface contact with the piezoelectric polymer body 16. The inertia mass 22 comprises two electroconductive layers 24 and 28 which are sandwiched around a thinner a electroconductive layer 26 which functions as a lead. The tab portion 26′ on the thin electroconductive layer 26 is used to make electrical connections with other parts of the accelerometer. The electroconductive inertia mass should be of a sufficient weight such that when the substrate 12 is accelerated in a direction which is substantially perpendicular to its major surface, the mass acts upon the piezoelectric polymer body 16 to produce an electrical output between the layers 14 and 26 which are functioning as first and second electrodes, respectively. The electroconductive layers 24, 26 and 28 may be fabricated from a variety of conductive materials, such as stainless steel or brass sheets.

The substrate 12, first electroconductive layer 14, piezoelectric polymer films 18 and 20, and the electroconductive layers 24, 26 and 28 are all adhesively secured together in a stacked arrangement such that an electrical output is produced between the first and second electrodes 14 and 26, respectively, which is proportional to the component of acceleration substantially perpendicular to the substrate's major surface. The stacked arrangement may be formed by adhesively securing the layers together with a very thin elastomeric polyurethane adhesive, such as TYCEL available from Lord Corporation. Although this adhesive is nonconductive, it is sufficiently thin to allow for sufficient surface contact and electrical conduction between adjacent surface layers. Alternatively, conductive adhesives, such as epoxies, may also be used to form the stacked assembly. Furthermore, the piezoelectric polymer films 18 and 20 may be bonded together by solvent welding with acetone.

A flexible dielectric polymer film 30 is also adhesively secured to a portion of the substrate 12 adjacent to the previously described stacked arrangement. The film 30 may be fabricated from a thin polyethylene terephalate film sheet, such as MYLAR® available from Du Pont. Other commercially available dielectric polymer films, such as polyimides available from DuPont under the trademark KAPTON, may also be used. This flexible dielectric layer 30 will function, with the electrical conductors 36, 38 and 40, as the leads for making electrical connections with the accelerometer. The processing circuitry for processing the electrical output produced by the piezoelectric polymer body 16 is disposed on the dielectric layer 30. For illustrative purposes only, a resistor 32 and a field effect transistor 34 are shown as the circuitry for amplifying and impedance matching the output produced by the piezoelectric polymer body 16. It should be understood that a variety of other conventional processing circuitry may be employed on the accelerometer. The resistor 32 contains bonding areas 32' and 32" which may be used for making electrical connections with other components of the circuit or the piezoelectric polymer body 26. In a like fashion, the field effect transistor 34 also contains bonding pads, 34', 34" and 34'". Electrical connections between the resistor 32, the field effect transistor 34 and the tab portions 14' and 26', respectively, can be made using conventional techniques, such as wire bonding.

The flexible dielectric polymer film 30 contains electrical conductors 36, 38 and 40 which are spaced apart for electrical isolation purposes. The electrical conductors 36, 38 and 40 may be a conductive foil, such as copper, which is adhesively secured to the dielectric polymer film 30. Alternatively, the electrical conductors may be a printed conductive ink, such as a finely divided electrically conductive metal suspended in a suitable polymer matrix. Inks which contain finely divided silver are particularly useful.

The dielectric polymer film 30 also contains a means 42 for making external electrical connections with the components of the accelerometer. The means 42 is commercially available crimp-on connector. However, solder pads or other conventional electrical connections for making external electrical connections may be substituted for the pin-type connector shown. The first electrical conductor 36 is electrically coupled with the tap portion 14' of the first electrode 14. The first conductor 36 also makes an electrical connection with the grounding pin 44 shown on the connector 42. The second electrical conductor 38 is electrically coupled with the terminal portion 34" on the field effect transistor 34. The second conductor 38 also supplies the output signal produced by the accelerometer to the output pin 46 shown on the connector 42. The third conductor 40 is electrically coupled to the power supply pin 48 on the connector 42 and makes electrical connections with the power supply terminal 34'" on the field effect transistor 34.

Although not shown in Figures 1 and 2, the dielectric film 30, containing the electrical conductors 36, 38 and 40, may be covered with another thin dielectric polymer film, such as MYLAR, for electrically isolating the conductors from the environment. All of the exposed portions of the first electrode 14, the piezoelectric polymer body 16, the electroconductive inertia mass 22 and the processing circuitry may be encapsulated within a polymeric dielectric material or may be enclosed within a metal casing. If a polymeric dielectric layer is employed, the exterior portions may be metallized for shielding the accelerometer from electromagnetic interference signals. The exterior metallization would be electrically coupled to the first conductor 36 for grounding purposes.

Turning now to Figure 3, the accelerometer of the second embodiment of the present invention is generally designated as 50. The accelerometer 50 differs from the accelerometer 10 shown in Figures 1 and 2 in that an electroconductive layer 52, forming a second electrode, is disposed between the piezoelectric polymer body 16 and the inertia mass 54. The electroconductive layer 52 also contains a tab portion 52' for providing electrical connections with the other components of the accelerometer. Since the inertia mass 54 is not required to function as a second electrode, it may be fabricated from a dielectric material, such as polycarbonate or acrylic resin sheets. Alternatively, the inertia mass 54 may be fabricated from an electrically conductive material, such as stainless steel or brass, as described earlier for the first embodiment or it may be electrically isolated within a body of dielectric material, such as polyethylene terephalate. The electroconductive layers 14 and 52, which form the first and second electrodes, respectively, may also be electroconductive layers which are formed on the piezoelectric polymer body 16 before assembly. Typically, these layers are either screen printed conductive inks or metallized layers which are applied using conventional thin film deposition techniques. When the electrodes 14 and 52 are formed on the piezoelectric polymer body before assembly, a conductive tab portion is generally soldered onto the electrodes using a low temperature solder so that electrical connections can be made with the electrodes.

Figure 4 illustrates a third embodiment of the present invention which is generally designated as 60. This embodiment can be used in conjunction with either of the accelerometers 10 or 50 which have been previously described. This embodiment extends the flexible dielectric polymer film 30 under the stacked arrangement containing the piezoelectric polymer body 16. The flexible dielectric polymer film 30 contains an electrical conductor 62 with an enlarged portion 62' which is electrically coupled with the grounding pin 44 on the connector 42. The enlarged portion 62' will extend under the first electroconductive layer 14 so that electrical contact is made between the two layers. Alternatively, in the accelerometers 10 and 50, the first electroconductive layer 14 may be eliminated and the enlarged conductive portion 62' would be in surface contact with the piezoelectric polymer film 16 and function as the first electrode. The electrical conductor 62 and the enlarged portion 62' would be fabricated using the same techniques described earlier with regard to Figures 1 and 2.

The accelerometers 10 and 50 can be mounted on the object which undergoes vibration by merely applying an adhesive or a pressure sensitive tape to the surface of the substrate 12 which is opposite to the processing circuitry and the piezoelectric polymer body 16.

The size of the accelerometers of the present invention can vary depending on the application. However, since the accelerometer is comprised of a plurality of stacked layers, it can be fabricated to have a small package size. For example, the substrate may be in the order of about 12 millimeters by 6 millimeters and the total height of the accelerometer may be as low as about 2 millimeters. An accelerometer of this size would typically have an inertia mass that weighs about 0.2 to 1.0 grams. It should be understood that these dimensions are merely illustrative of the small compact size to which the accelerometers of the present invention may be fabricated.

Because of the small size, the accelerometer is lightweight, such as less than about 2 grams (including 10 inches of leads and a connector), and can be used on vibrating parts which would not previously have accepted the conventional, heavier piezoelectric ceramic accelerometers. Furthermore, since the accelerometer is comprised of a plurality of stacked elements, its manufacturing cost is sufficiently low and would allow for it to be used as a disposable sensor. The flexible nature of the piezoelectric polymer body and the stacked design also allow the accelerometer to resist high impacts.

The accelerometer of the present invention produces a minimal amount of electrical energy in response to the component of acceleration which is parallel to the substrate's major surface disposed adjacent to the piezoelectric body. This occurs because the sandwich-like construction of the accelerometer clamps the piezoelectric body to reduce the effect of any stress in the previously described direction. However, the component of acceleration perpendicular to this major surface produces a substantial electrical output because of the stresses induced on the piezoelectric body by the inertia mass. If the piezoelectric body was not clamped, the sensitivity of the accelerometer to the component of acceleration perpendicular to the substrate surface would be significantly reduced. This would occur because the polarity of the electrical output produced by stress acting parallel to the major surface is opposite to that produced by stress acting in a direction perpendicular to the major surface. Thus, the sandwich-like construction of the accelerometer of the present invention allows for a single component of the acceleration vector to be accurately measured.

## Claims

1. An accelerometer, comprising:
a rigid dielectric substrate having a major surface,
an electroconductive layer disposed over at least a portion of said major surface of said substrate forming a first electrode;
a piezoelectric polymer body having opposed first and second surfaces, said first surface being in electrical contact with said electroconductive layer; and
an electroconductive inertia mass in electrical contact with said second surface of said body and forming a second electrode, whereby an electrical output is produced between said first and second electrodes which is proportional to the component of acceleration substantially perpendicular to the major surface of said substrate.

2. An accelerometer according to claim 1, further comprising:
processing means disposed on said substrate adjacent to said body for processing the electrical output.

3. An accelerometer according to claim 2 wherein said processing means comprises amplification and impedance matching circuitry.

4. An accelerometer according to claim 3 wherein said piezoelectric polymer body is a plurality of piezoelectric polymer films in surface-to-surface contact, each of said films having been poled in a direction which is substantially perpendicular to said substrate.

5. An accelerometer according to claim 4 wherein at least one of said piezoelectric polymer films comprises vinylidene fluoride.

6. An accelerometer according to claim 4 wherein at least one of said piezoelectric polymer films is a copolymer of vinylidene fluoride and trifluoroethylene.

7. An accelerometer according to claim 3, further comprising:
a dielectric polymer film having a plurality of electrical conductors disposed thereon and electrically isolated from each other, at least a portion of said dielectric polymer film disposed on said substrate so that at least one of said plurality of electrical conductors is electrically coupled with said processing means.

8. An accelerometer according to claim 7 wherein a portion of said dielectric polymer film is disposed between said substrate and said first electrode so that at least one of said plurality of electrical conductors is electrically coupled with said first electrode.

9. An accelerometer according to claim 8 wherein said first electrode and said electrical conductor coupled with said first electrode are a continuous layer formed on said dielectric polymer film.

10. An accelerometer according to claim 9 wherein said second electrode is fabricated from a material selected from the group consisting of stainless steel and brass.

11. An accelerometer according to claim 3 wherein said first and second electrodes are each fabricated from a material selected from the group consisting of stainless steel and brass.

12. An accelerometer according to claim 3 wherein said rigid dielectric substrate comprises a ceramic material.

13. An accelerometer according to claim 1 wherein said substrate, said first electrode, said piezoelectric polymer body and said electroconductive inertia mass which forms said second electrode are attached together in a sandwich-like configuration whereby a minimal electrical output is produced between said first and second electrodes in response to the component of acceleration substantially parallel to the surface of said substrate which is disposed under said first electrode.

14. An accelerometer, comprising:
a rigid dielectric substrate;
a first electroconductive layer disposed over at least a portion of said substrate forming a first electrode;
a piezoelectric polymer body having opposed first and second surfaces, said first surface being in electrical contact with said first electroconductive layer;
a second electroconductive layer in electrical contact with said second surface of said body forming a second electrode;
an inertia mass disposed over said second electroconductive layer, whereby an electrical output is produced between said first and second electrodes which is proportional to the component of acceleration substantially perpendicular to the surface of said substrate which is disposed under said first electrode.

15. An accelerometer according to claim 14, further comprising:
processing means disposed on said substrate adjacent to said body for processing the electrical output.

16. An accelerometer according to claim 15 wherein said processing means comprises amplification and impedance matching circuitry.

17. An accelerometer according to claim 16 wherein said piezoelectric polymer body is a plurality of piezoelectric polymer films in surface-to-surface contact, each of said films having been poled in a direction which is substantially perpendicular to said substrate.

18. An accelerometer according to claim 17 wherein at least one of said piezoelectric polymer films comprises vinylidene fluoride.

19. An accelerometer according to claim 17 wherein at least one of said piezoelectric polymer films is a copolymer of vinylidene fluoride and trifluoroethylene.

20. An accelerometer according to claim 15, further comprising:
a dielectric polymer film having a plurality of electrical conductors disposed thereon and electrically isolated from each other, at least a portion of said dielectric polymer film disposed on said substrate so that at least one of said plurality of electrical conductors is electrically coupled with said processing means.

21. An accelerometer according to claim 20 wherein a portion of said dielectric polymer film is disposed between said substrate and said first electrode so that at least one of said plurality of electrical conductors is electrically coupled with said first electrode.

22. An accelerometer according to claim 21 wherein said first electrode and said electrical conductor coupled with said first electrode are a continuous layer formed on said dielectric polymer film.

23. An accelerometer according to claim 22 wherein said second electrode is fabricated from a material selected from the group consisting of stainless steel and brass.

24. An accelerometer according to claim 15 wherein said first and second electrodes are each fabricated from a material selected from the group consisting of stainless steel or brass.

25. An accelerometer according to claim 15 wherein said rigid dielectric substrate comprises a ceramic material.

26. An accelerometer according to claim 14 wherein said substrate, said first electrode, said piezoelectric polymer body, said second electrode and said inertia mass are affixed together in a sandwich-like configuration whereby a minimal electrical output is produced between said first and second electrodes in response to the component of acceleration substantially parallel to the surface of said substrate which is disposed under said first electrode.

**Fig.1**

**Fig.2**

**Fig. 3**

**Fig. 4**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 021 898 (THOMSON-CSF)<br>* Page 3, lines 28-30; page 4, lines 20-27; page 9, line 12 - page 10, line 23; figures 1,8 *<br>--- | 1-3,5,6 ,13-16, 18,19, 26 | G 01 P 15/09 |
| A | GB-A-1 140 431 (KISTLER INSTR. CORP.)<br>* Page 2, line 100 - page 3, line 9; page 6, lines 2-117; figures 1,5 *<br>--- | 1-4,13- 17,26 | |
| A | GB-A- 731 378 (GENERAL ELECTRIC CO. LTD)<br>* Page 3, lines 111-128; figure 1 *<br>--- | 1,13,14 ,26 | |
| A | EP-A-0 147 271 (REGIE NATIONALE DES USINES RENAULT)<br>* Page 4, line 11 - page 5, line 4; figures 1-3,6,7 *<br>----- | 7-9,20- 22 | |
| | | | **TECHNICAL FIELDS SEARCHED (Int. Cl.5)**<br><br>G 01 P<br>B 06 B |

The present search report has been drawn up for all claims

| Place of search | Date of completion of the search | Examiner |
|---|---|---|
| THE HAGUE | 07-12-1989 | HANSEN P. |

EPO FORM 1503 03.82 (P0401)